# EUROPÄISCHE PATENTANMELDUNG

(11) **EP 0 960 648 A1**
(43) Veröffentlichungstag der Anmeldung: **01.12.1999**
(21) Anmeldenummer: 99104560.0
(22) Anmeldetag: 08.03.1999
(51) Int. Cl.: B01D 53/84, B01D 47/00, B01D 53/75

(54) **Verfahren und Anlage zum Reinigen des Abgases einer Trocknungsanlage**

(30) Priorität: 27.05.1998 CH 116698
(71) Anmelder: D.I. Wieser-Linhart, Emil A.J., 5020 Salzburg (AT); ALOIS SCHEUCH GESELLSCHAFT m.b.H., A-4910 Ried i.I. (AT)
(72) Erfinder: Wieser-Linhart, Emil A.J., Dipl-Ing., 5020 Salzburg (AT)
(74) Vertreter: Blum, Rudolf Emil Ernst

(57) **Zusammenfassung**

Das Abgas tritt durch eine Abgasleitung (1) in eine Wäschervorrichtung (2) ein. In der Wäschervorrichtung (2) werden vorwiegend Feststoffpartikel abgeschieden. Das vorgewaschene Abgas strömt von der Wäschervorrichtung (2) durch eine Tropfenabscheiderstrecke (10) zu einer Tropfkörpereinrichtung (11), um einer Belebtschlamm-Behandlung zur Abscheidung von gasförmigen Verunreinigung unterworfen zu werden. Um zur Belebtschlamm-Behandlung den Taupunkt und damit die absolute Feuchtigkeit des Abgases abzusenken, wird entweder dem vorgewaschenen Abgas durch eine Zufuhrleitung Frischluft zugegeben oder das durch die Waschwasserleitung (5) kreislaufgeführte Waschwasser der Wäschervorrichtung (2) in einem in einem Kühlturm integrierten Wärmetauscher (26) gekühlt. Ein Teil des Waschwassers der Wäschervorrichtung (2) wird durch einen ersten Feststoffabscheider (7) geführt, von welchem ein Teil des Filtrates dem unter der Tropfkörpereinrichtung (11) angeordneten Belebtschlammbecken (13) zugeleitet wird. Ein Teil des Belebtschlamm-Wassers aus der Tropfkörpereinrichtung (11) wird durch einen zweiten Feststoffabscheider (17) geführt, von welchem ein Teil des Filtrates im Gegenzug dem Waschwasser der Wäschervorrichtung (2) zugeleitet wird.

## Beschreibung

Die vorliegende Erfindung betrifft ein Verfahren zum Reinigen des Abgases einer Biomassen-Trocknungsanlage. Sie betrifft weiter eine Anlage zur Durchführung des Verfahrens.

In industriellen Anlagen, in welchen z.B. Holz oder Futtermittel getrocknet werden, werden abhängig von der verarbeiteten Biomasseart, der Konstruktion der vorhandenen Trocknungsvorrichtungen und dem Temperaturniveau des Trocknungsvorganges drei Gruppen von Luftverschmutzungen freigesetzt, nämlich a) Staub, b) Harzaerosole, im Fachgebiet auch blauer Rauch genannt, und c) organische Gase wie Formaldehyd, Pinene, Terpene und organische Säuren.

Diese Verunreinigungen müssen aus dem Abgas der Trocknungsanlagen, bevor das Abgas in die Umgebung ausgelassen wird, entfernt werden.

Die dazu notwendige Reinigungsbehandlung hängt im wesentlichen von den variierenden Anteilen der oben genannten Verschmutzungsgruppen ab und ist somit den jeweils vorherrschenden Bedingungen anzupassen.

Zur Reinigung der Trocknerabgase aus Holztrocknungsanlagen sind insbesondere drei Arten von Reinigungsverfahren, bzw. Reinigungsanlagen wie folgt bekannt geworden.
a) Nasswäscheranlagen mit oder ohne Zugabe von Chemikalien und mit einer Abwasserausschleusung. Diese bekannten Anlagen weisen die Form einer Venturivorrichtung, einer Gegenstrahlvorrichtung oder auch einer Nasselektrofiltervorrichtung auf. Mit diesen Anlagen wird Staub mit Wirkungsgraden von 80-90 % abgeschieden. Jedoch sind sie in bezug auf organische Gase (z.B. Formaldehyd) im Wirkungsgrad auf 10-20 % Abscheideleistung beschränkt.
b) Regenerative thermische Nachverbrennungsanlagen mit Vorwäsche. Mit solchen Anlagen können wohl Staub und auch organische Gase mit einem Wirkungsgrad von mehr als 90 % abgeschieden werden, jedoch sind solche Nachverbrennungsanlagen sowohl in der Investition als auch im Betrieb sehr teuer.
c) Anlagen mit einem kombinierten Reinigungsverfahren einschliesslich einer Vorwaschvorrichtung und einer Biowascheinrichtung. Jedoch sind solche Anlagen insbesondere aufgrund der Problematik bezüglich der Abscheidung von Harzaerosolen und den hohen Taupunkttemperaturen des Abgases nur beschränkt einsetzbar gewesen. Im allgemeinen können wohl Abscheideleistungen für Staub von 80-90 % erzielt werden, jedoch nur, falls keine Harzaerosole vorhanden sind, und für organische Gase können Abscheideleistungen von lediglich 50-60 % erreicht werden.

Ziel der Erfindung ist ein Verfahren und eine Anlage zur Durchführung des Verfahrens zu zeigen, mittels welchen die oben beschriebenen Nachteile behoben sind und eine zusätzliche Abwasserbelastung vermieden wird.

Das erfindungsgemässe verfahren ist dadurch gekennzeichnet, dass das Abgas in einem ersten Schritt zur Abscheidung von vorwiegend Feststoffpartikeln in einer Wäschervorrichtung mit einem ersten Waschwasserkreis vorgewaschen wird und das vorgewaschene Abgas danach in einem zweiten Schritt zur Abscheidung von gasförmigen Verunreinigungen einer Belebtschlamm-Behandlung mit einem zweiten Waschwasserkreis unterworfen wird, und dass die Temperatur des Abgases zur Belebtschlamm-Behandlung vermindert wird, um dessen Taupunkt durch Herabsetzung der absoluten Feuchtigkeit abzusenken.

Die Anlage zur Durchführung des Verfahrens ist gekennzeichnet durch einen ersten Waschwasserkreis mit einer Wäschervorrichtung, die waschwasserseitig von einer Pumpenvorrichtung und einem Feststoffabscheider gefolgt ist, durch einen zweiten Waschwasserkreis mit einer feststehenden Tropfkörpervorrichtung, die Waschwasserseitig von einem Belebtschlammbecken und einem zweiten Feststoffabscheider gefolgt ist, welche Wäschervorrichtung abgasseitig mit der Tropfkörpervorrichtung in Verbindung steht, und durch eine Einrichtung zur Verminderung der Temperatur des der Tropfkörpervorrichtung zugeführten Abgases.

Vorteilhafte Ausbildungen ergeben sich aus dem abhängigen Ansprüchen.

Die durch die Erfindung erreichten Vorteile sind im wesentlichen darin zu sehen, dass der Einsatzbereich für die mikrobiologische Abgasreinigung bei der Biomassentrocknung wesentlich erweitert ist. Dadurch wird eine höhere Wirtschaftlichkeit erreicht. Auch werden die Verfügbarkeit und Stabilität des Betriebes erhöht, wobei die Investitions- und Betriebskosten wesentlich abgesenkt werden können.

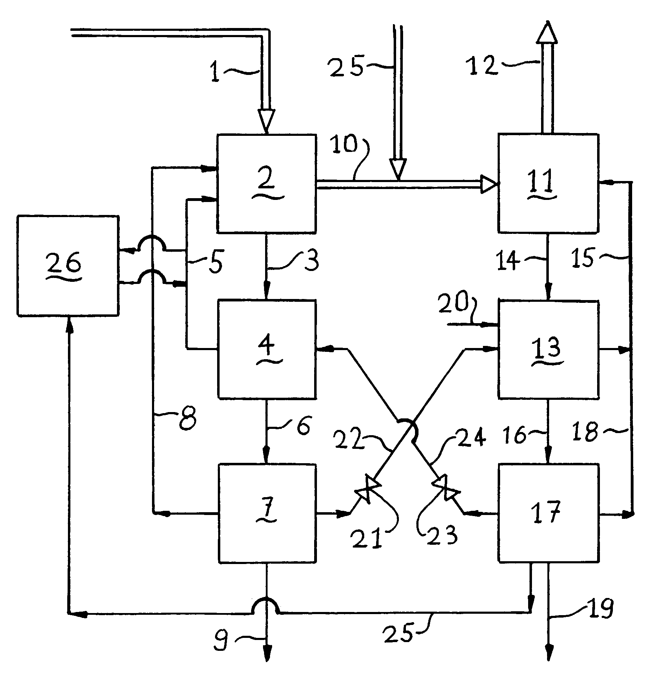

Nachfolgend wird der Erfindungsgegenstand anhand der Zeichnung beispielsweise näher erläutert.

Die einzige Figur zeigt vereinfacht ein Fliessschema zur Erläuterung von Ausführungen der Erfindung.

Vorerst wird der Aufbau der Anlage zum Reinigen von Trocknerabgas einer Holztrocknungsanlage allgemein erläutert.

Das Trocknerabgas wird von der nicht gezeichneten Holztrocknungsanlage, z.B. Teil eines Spanholzwerkes, durch eine Abgasleitung 1 einer Wäschervorrichtung 2 zugeführt. Diese Wäschervorrichtung 2 ist gemäss allgemein bekannten Ausführungen beispielsweise als Niederdruck-Venturi oder auch insbesondere zur Harzaerosolabscheidung als Nasselektrofilter ausgebildet.

Das Waschwasser strömt aus der Wäschervorrichtung 2 durch eine Verbindungsleitung 3 zu einer Pumpenvorrichtung 4. Von dieser Pumpenvorrichtung 4 führt eine erste Waschwasserleitung 5 direkt zurück zur Wäschervorrichtung 2.

Von der Pumpenvorrichtung 4 führt eine weitere Verbindungsleitung 6 zu einem ersten Feststoffabscheider 7, der ebenfalls gemäss bekannten Ausbildungen aufgebaut ist. Von diesem ersten Feststoffabscheider 7 führt eine zweite Waschwasserleitung 8 zur Wäschervorrichtung 2 zurück.

Die Wäschervorrichtung 2 weist einen Niederdruckbereich und einen Hochdruckbereich in bezug auf das eingebrachte Waschwasser auf. Der Ausdruck Bereich ist dabei auf die entsprechenden Einspritzdüsen für das Waschwasser bezogen.

Die Verteilung der insgesamten der Wäschervorrichtung 2 zugeführten Waschwassermenge ist derart, dass im Niederdruckbereich, d.h. von der ersten Waschwasserleitung 5 her etwa 85-90 % der gesamten umlaufenden Waschwassermenge über die dazugehörigen Düsen eingebracht wird, und dass im Hochdruckbereich, d.h. von der zweiten Waschwasserleitung 8 her etwa 5-15 % der gesamten umlaufenden Waschwassermenge über entsprechende, weitere Düsen eingebracht wird.

Unter Niederdruck ist allgemein ein Druck weniger als 10⁵ Pa, unter Hochdruck ein Druck über 10⁵ Pa zu verstehen.

Die beim Hockdruckbereich mit einem Druck von über 10⁵ Pa eingebrachten Waschwassertröpfchen sind derart klein, dass die zur Verfügung stehende Oberfläche des entsprechenden Waschwassers stark erhöht ist und damit der Abscheideeffekt von Verunreinigungen aus dem Abgas stark begünstigt ist.

Zu bemerken ist, dass das Niederdruck-Waschwasser von der Pumpenvorrichtung 4 her unmittelbar über die erste Waschwasserleitung 5 zur Wäschervorrichtung 2 zurückgeführt ist, jedoch das Hochdruck-Waschwasser von der Pumpenvorrichtung 4 vorerst den ersten Feststoffabscheider 7 durchläuft, um danach durch die zweite Waschwasserleitung 8 der Wäschervorrichtung 2 zurückgeführt wird. Der Grund dazu ist, dass für die Düsen zum Einbringen des Hochdruck-Waschwassers wegen der Feinheit der Düsen die Feststoffe aus diesem Waschwasserteil entfernt sein müssen.

Die Bezugsziffer 9 bezeichnet den Feststoffablass aus dem ersten Feststoffabscheider 7.

Die Anlageteile 2, 4, 7 mit den dazugehörigen Leitungen 3, 5, 6, 8 bestimmen den ersten Waschwasserkreis der Reinigungsanlage.

Das in der Wäschervorrichtung 2 des ersten Waschwasserkreises im ersten Schritt vorbehandelte und von Feststoffen befreite Abgas wird über eine beruhigte Tropfenabscheidestrecke 10 bekannter Ausführung dem Anlageteil zur Belebtschlamm-Behandlung zur Abscheidung von gasförmigen Verunreinigungen in einem zweiten Behandlungsschritt zugeleitet.

Das Abgas tritt vorerst in eine Tropfkörpervorrichtung 11 ein.

Diese weist mindestens einen Tropfkörper bekannter Ausbildung auf, der von einem Drehsprenger benetzt wird. Die Anordnung ist dabei derart gewählt, dass das Abgas im Gegenstrom zum herabrieselnden Waschwasser durch den jeweiligen Tropfkörper strömt. Bei dieser Ausführung ist der Tropfkörper aus miteinander derart verbundenen und ausgebildeten Kunststoffplatten aufgebaut, dass er zick-zack-artig von oben nach unten verlaufende Kanäle enthält. Auf den Oberflächen der Kanalwände ist nun ein aufgewachsener Biofilm, also Belebtschlamm vorhanden, der das Abgas von gasförmigen organischen Verunreinigungen befreit.

Das gereinigte Gas tritt durch den Kamin 12 aus der Tropfkörpervorrichtung 11 aus.

Das Tropfkörpermaterial der Tropfkörpervorrichtung 11 weist eine spezifische Oberfläche von 100-300 m²/m³ bei einer freien Durchgangsfläche von mehr als 96 % auf. Das heisst, dass 100-300 m² Aufwuchsfläche für den biologischen Film pro 1 m³ Tropfkörpermaterial vorhanden ist und über 96 % als freie Durchgangsfläche für den Gasdurchgang (in senkrechter Richtung) zur Verfügung steht. Die restlichen 4 % sind die Dicke, d.h. Wandstärke der das Tropfkörpermaterial bildenden Kunststoffolien.

Das feststehende, z.B. auf einem Rost aufliegende Tropfkörpermaterial wird durch z.B. einen Drehsprenger berieselt. Die Berieselungsdichte dieser Ausführung beträgt 1-20 m³/m²h, d.h. es werden pro Stunde 20 m³ Berieselungswasser pro m² Oberfläche des Tropfkörpermaterials zugeführt.

Schliesslich ist zu bemerken, dass die Verweilzeit des zu behandelnden Gases im Tropfkörpermaterial 3-30 Sek. beträgt.

Das durch die Tropfkörpervorrichtung 11 herabrieselnde Wasser strömt in ein unter dem Tropfkörper angeordnetes Belebtschlammbecken 13, so wie in der Figur mit dem Pfeil 14 angedeutet ist. Das Belebtschlammbecken 13 ist in bekannter Weise bodenbelüftet. Dadurch wird das Biosystem stabilisiert, es stellt sich eine Mischpopulation aus trägerfixierten (Tropfkörper) und freien Bakterien ein, welch letztere mit dem Benetzungswasser über die Zufuhrleitung 15 über den Tropfkörper der Tropfkörpervorrichtung 11 zirkuliert werden.

Eine Teilmenge des mit Bioschlamm beladenen Wassers strömt vom Belebtschlammbecken 13 gemäss dem Pfeil 16 in einen zweiten Feststoffabscheider 17. Damit wird einerseits die Biomasse im System gehalten, und andererseits ist die Abgabe einer kleinen Ausschleuswassermenge durch den Auslass 19 ermöglicht, z.B. in einer Menge von 1-10 m³/h, um Aufsalzungen zu vermeiden. Die Restmenge des Wassers strömt aus dem zweiten Feststoffabscheider 17 ebenfalls zur Tropfkörpervorrichtung 11, so wie durch die Zufuhrleitung 18 angedeutet ist.

Weiter werden, wie durch den Pfeil 20 angedeutet ist, je nach Bedarf in das Belebtschlammbecken 13, Stickstoff und Phosphor in der notwendigen Menge eingegeben, sofern dies erforderlich ist. Auch wird der pH-Wert des Wasserkreislaufs durch Zugabe von Säure oder Lauge in das Belebtschlammbecken 13 in einem Bereich von 6,5 - 8,5 konstant gehalten.

Die Anlageteile 11, 13, 17 mit den dazugehörigen Leitungen 14, 15, 16, 18 bestimmen den zweiten Waschwasserkreis der Reinigungsanlage.

Vom ersten Feststoffabscheider 7 des ersten Waschwasserkreises kann über eine mit einem Absperrventil 21 versehene Überführleitung 22 Filtrat des ersten Waschwasserkreises in das Belebtschlammbecken des zweiten Waschwasserkreises überführt werden.

Gleichermassen kann im Gegenzug vom zweiten Feststoffabscheider 17 des zweiten Waschwasserkreises Filtrat über eine mit einem Absperrventil 23 versehene Überführleitung 24 Filtrat des zweiten Waschwasserkreises dem ersten Waschkreis zugegeben werden.

Durch diese kreuzweise Schaltmöglichkeit ist es möglich, den Gesamtwirkungsgrad der Reinigungsanlage zu erhöhen, indem organisch belastetes Waschwasser des ersten Waschwasserkreises in der Biologie, d.h. im Belebtschlammbecken 13 verarbeitet wird, so dass bereits im Wasser des ersten Waschwasserkreises aufgenommene organische Gase im Belebtschlammbecken 13, also grundsätzlich im zweiten Waschwasserkreis abgebaut werden. Im Gegenzug kann Filtrat des zweiten Waschwasserkreises vom zweiten Feststoffabscheider 17 über die Leitung 24 zum ersten Waschkreis überführt werden.

Dadurch, dass schon im Waschwasser des ersten Waschwasserkreises aufgenommene organische Gase im Waschwasser direkt vom ersten Feststoffabscheider 7 zum Belebtschlammbecken 13 überführt werden, wird eine Abbaulastverteilung vom Tropfkörper der Tropfkörpervorrichtung 11 zum Bioschlamm des Belebtschlammbeckens erreicht; dieses verbessert den Gesamtabbau der organischen Gase und den Wirkungsgrad der insgesamten Anlage.

In der Wäschervorrichtung 2 stellt sich eine Waschwassertemperatur von 50-70°C ein. Wie schon eingangs erwähnt wurde, ist diese hohe Temperatur für einen gesicherten Betrieb der biologischen Reinigung zu hoch.

Erfindungsgemäss wird nun diese Temperatur abgesenkt. Dabei sind zwei verschiedene Lösungen möglich, die für sich allein oder gemeinsam zur Anwendung kommen können. Zu bemerken ist grundsätzlich, dass durch diese Lösungen kein zusätzliches Abwasser und auch keine Sekundäremission entsteht.

Gemäss der einen Ausführung wird dem gesättigten Rohgas, das von der Wäschervorrichtung 2 zur Tropfkörpervorrichtung 11 strömt, durch eine Zufuhrleitung 25 Frischluft zugegeben. Die Menge der zugegebenen Frischluft kann 30-150 % der Robgasmenge, d.h. durch die Abgasleitung 1 einströmenden Abgasmenge betragen. Damit wird ein neuer Mischtaupunkt mit reduzierter absoluter Feuchte erreicht und ein sicheres Abbauen der organischen Gase durch die Belebtschlamm-Behandlung erzielt.

Gemäss einer weiteren Ausführung wird das Waschwasser des ersten Waschwasserkreises mit einem indirekten Kühlturm 26 gekühlt.

Aus dem Flussschema ist ersichtlich, dass dabei nur das dem Niederdruckbereich der Wäschervorrichtung 2 zugeordnete Waschwasser im Kühlturm 26 gekühlt wird. Es erfolgt somit keine Kühlung der mengenmässig relativ kleinen Menge des beim Hockdruckbereich in die Wäschervorrichtung 2 eingebrachten Waschwasseranteils.

Es sind also zwei Möglichkeiten zur Verminderung der Temperatur des der Tropfkörpereinrichtung 11 des Biowash-Anlageteils möglich. Welcher der beiden Möglichkeiten der Vorzug zu geben ist, hängt von der absoluten Feuchte des Rohgases, d.h. durch die Abgasleitung 1 zugeführten Abgases, somit vom Primärtaupunkt sowie von der einzuhaltenden Temperatur im zweiten Waschwasserkreis 11, 13-17 zu biologischen Behandlung ab.

Bei hohen Rohgasfeuchten, wie etwa bei Spänetrocknern, werden wegen der hohen nötigen Frischluftmenge zur Kühlung, d.h. Temperaturverminderung des Abgases beide Kühlvarianten zweckmässig parallel eingesetzt. Bei geringeren Rohgasfeuchten wie etwa bei MDF Trocknern ist es eine Frage der Wirtschaftlichkeit, welcher Kühlvariante der Vorzug zu geben ist. Bei einem MDF-Trockner, (MDF = Medium-Density-Fibre) der z.B. in Verbindung mit der Herstellung von Heizfaserplatten verwendet wird und mittels welchem die mechanische zerfaserten Hackschnitzel in einem 180°C heissen Luftstrom von einer Feuchte von 100 % auf 10 % getrocknet werden, weist das Abgas bekanntlich eine geringe Feuchtigkeit auf.

## Patentansprüche

1. Verfahren zum Reinigen des Trocknerabgases einer Holztrocknungsanlage, dadurch gekennzeichnet, dass das Abgas in einem ersten Schritt zur Abscheidung von vorwiegend Feststoffpartikeln in einer Wäschervorrichtung (2) mit einem ersten Waschwasserkreis (2-8) vorgewaschen wird und das vorgewaschene Abgas danach in einem zweiten Schritt zur Abscheidung von gasförmigen Verunreinigungen einer Belebtschlamm-Behandlung mit einem zweiten Waschwasserkreis (11, 13-18) unterworfen wird, und dass die Temperatur des Abgases zur Belebtschlamm-Behandlung vermindert wird, um dessen Taupunkt durch Herabsetzung der absoluten Feuchtigkeit abzusenken.

2. Verfahren nach Anspruch 1, dadurch gekennzeichnet, dass das vorgewaschene Abgas zur Belebtschlamm-Behandlung durch eine einer Wasserberieselung unterworfenen Tropfkörpervorrichtung (11) geleitet wird, und dass das Berieselungswasser nach dem Austritt aus der Tropfkörpervorrichtung (11) einem Belebtschlammbecken (13) zugeführt und danach zur Berieselung aus dem Belebtschlammbecken (13) entnommen und damit im Kreislauf geführt wird.

3. Verfahren nach Anspruch 1 oder 2, dadurch gekennzeichnet, dass das Waschwasser der Wäschervorrichtung (2) im Kreislauf geführt wird, dass ein erster Mengenanteil des Waschwassers nach dem Austritt aus der Wäschervorrichtung (2) über eine Pumpenvorrichtung (4) unmittelbar zur Wäschervorrichtung (2) zugeführt und mit einem ersten Druck in dieselbe eingeführt wird, und ein zweiter Mengenanteil des Waschwassers nach dem Austritt aus der Wäschervorrichtung (2) über die Pumpenvorrichtung (4) einem Feststoffabscheider (7) und von demselben zur Wäschervorrichtung (2) zurückgeführt und mit einem zweiten Druck in dieselbe zur Vergrösserung der Waschwasseroberfläche fein verteilt eingebracht wird, wobei der erste Mengenanteil grösser als der zweite Mengenanteil wird und der erste Druck niedriger als der zweite Druck ist.

4. Verfahren nach einem der vorangehenden Ansprüche, dadurch gekennzeichnet, dass im ersten (2-8) und im zweiten Waschwasserkreis (11, 13-18) jeweils ein Feststoffabscheider (7; 17) vorhanden ist, wobei das Filtrat des Feststoffabscheiders (7) des ersten Waschwasserkreises (2-8) dem zweiten Waschwasserkreis (11, 13-18) zugeführt und/oder teilweise ausgeschleust wird, und das Filtrat des Feststoffabscheiders (17) des zweiten Waschwasserkreises (11, 13-18) dem ersten Waschwasserkreis (2-8) zugeführt und/oder teilweise ausgeschleust wird.

5. Verfahren nach einem der vorangehenden Ansprüche, dadurch gekennzeichnet, dass zur Verminderung der Temperatur des Abgases dem aus der Wäschervorrichtung ausströmenden, vorgewaschenen Abgas vor der Belebtschlamm-Behandlung Frischluft in einer Menge von 30-150 % des Abgases zugeleitet wird.

6. Verfahren nach einem der vorangehenden Ansprüche 1-4, dadurch gekennzeichnet, dass zur Verminderung der Temperatur des Abgases mindestens eine Teilmenge des kreislaufgeführten Waschwassers im ersten Waschwasserkreis (2-8) mittels einem mit einem Kühlturm (26) verbundenem Wärmetauscher gekühlt wird, wobei der Zusatzwasserbedarf des Kühlturms (26) durch in einem Feststoffabscheider (17) des zweiten Waschkreises (11; 13-18) gereinigten Abwasserkondensates gedeckt wird.

7. Verfahren nach einem der vorangehenden Ansprüche, dadurch gekennzeichnet, dass die Verweilzeit des zu behandelnden Abgases in der Tropfkörpervorrichtung (11) 3-30 Sek. beträgt.

8. Anlage zur Durchführung des Verfahrens nach einem der vorangehenden Ansprüche, gekennzeichnet durch einen ersten Waschwasserkreis (2-8) mit einer Wäschervorrichtung (2), die waschwasserseitig von einer Pumpenvorrichtung (4) und einem Feststoffabscheider (7) gefolgt ist, durch einen zweiten Waschwasserkreis (11; 13-18) mit einer feststehenden Tropfkörpervorrichtung (11), die waschwasserseitig von einem Belebtschlammbecken (13) und einem zweiten Feststoffabscheider (17) gefolgt ist, welche Wäschervorrichtung (2) abgasseitig mit der Tropfkörpervorrichtung (11) in Verbindung steht, und durch eine Einrichtung (25; 26) zur Verminderung der Temperatur des der Tropfkörpervorrichtung (11) zugeführten Abgases.

9. Anlage nach Anspruch 8, dadurch gekennzeichnet, dass die Pumpenvorrichtung (4) einen ersten, waschwasserseitig mit der Wäschervorrichtung (2) kommunizierenden Austritt und einen zweiten, waschwasserseitig mit dem ersten Feststoffabscheider (7) kommunizierenden Austritt aufweist, welcher Feststoffabscheider (7) austrittseitig ebenfalls mit der Wäschervorrichtung (2) kommuniziert, dass die Tropfkörpervorrichtung (11) waschwasserseitig mit einem Belebtschlammbecken (13) kommuniziert, welches Belebtschlammbecken (13) waschwasserseitig einerseits mit der Tropfkörpervorrichtung (11) und andererseits mit dem zweiten Feststoffabscheider (17) kommuniziert, welcher Feststoffabscheider (17) waschwasseraustrittseitig ebenfalls mit der Tropfkörpervorrichtung (11) kommuniziert.

10. Anlage nach einem der Ansprüche 8-9, dadurch gekennzeichnet, dass die Wäschervorrichtung (2) abgasseitig über eine Verbindungsleitung (10) mit einem zusätzlichen Frischlufteinlass (25) mit der Tropfkörpervorrichtung (11) in Verbindung steht, um mittels zusätzlich zugeführter Frischluft die Temperatur des der Tropfkörpervorrichtung (11) zugeführten Abgases zu vermindern.
